# EUROPEAN PATENT APPLICATION

(11) **EP 0 780 943 A1**
(43) Date of publication of application: **25.06.1997**
(21) Application number: 96118266.4
(22) Date of filing: 14.11.1996
(51) Int. Cl.: H02G 1/12

(54) **Cable stripping dies and method for utilizing same**

(30) Priority: 22.12.1995 US 576140
(71) Applicant: FRAMATOME CONNECTORS INTERNATIONAL, 92400 Courbevoie (FR)
(72) Inventor: Blake, Mark W., Milford, New Hampshire (US); Brunelli, Michael F., Auburn, New Hampshire (US)
(74) Representative: Beetz & Partner Patentanwälte

(57) **Abstract**

Cable stripping dies for removing the insulation from insulated electrical power cables (12), while the cables are energized, or not, are disclosed.

Each die (34, 36) consists of a die body (50, 62) with a U-shaped channel (66) extending longitudinally from one lateral side of the body to the other. Parallel knife edges (68, 70) are defined at the upper ends of the channel. A cutting blade (52, 76) with a semi-circular cut-out section (80), is secured to each end of the die body.

An insulated cable is positioned longitudinally between two dies secured within the jaws of a working head of a hydraulic tool, mounted on an isolated "hot stick", and rests in the semi-circular cut-out sections (80) of the cutting blades (52, 76), then the jaws are driven toward one another in a straight line fashion. The cutting blades pierce the insulation (38, 40) and center the die set on the cable (12) in proximity to the channels in the dies. The knife edges shear the insulation from the opposite faces of the cable as the cable is forced into the channels, thus exposing the core of the cable without scoring, or nicking, same.

## Description

### BACKGROUND OF THE INVENTION

### 1. Field of the Invention

This invention relates generally to cable stripping dies, and more particularly to hydraulically operated tools employing such dies to shear the insulation from electrical cables, such as aerial power lines, whether such cables are energized, or not.

### 2. Description of the Prior Art

Tools for stripping insulation from electrical cables are well known and highly developed. The majority of such tools require that the tool move relative to the longitudinal axis of the insulated cable so that the insulation is scored in a helical manner. The depth of the scoring must be controlled, lest the conductive core of the electrical cable be nicked, which leads to deterioration of the cable. After the scoring operation has been completed, the insulation must be wedged free of the cable and then removed by a needle nosed plier or other manual tool.

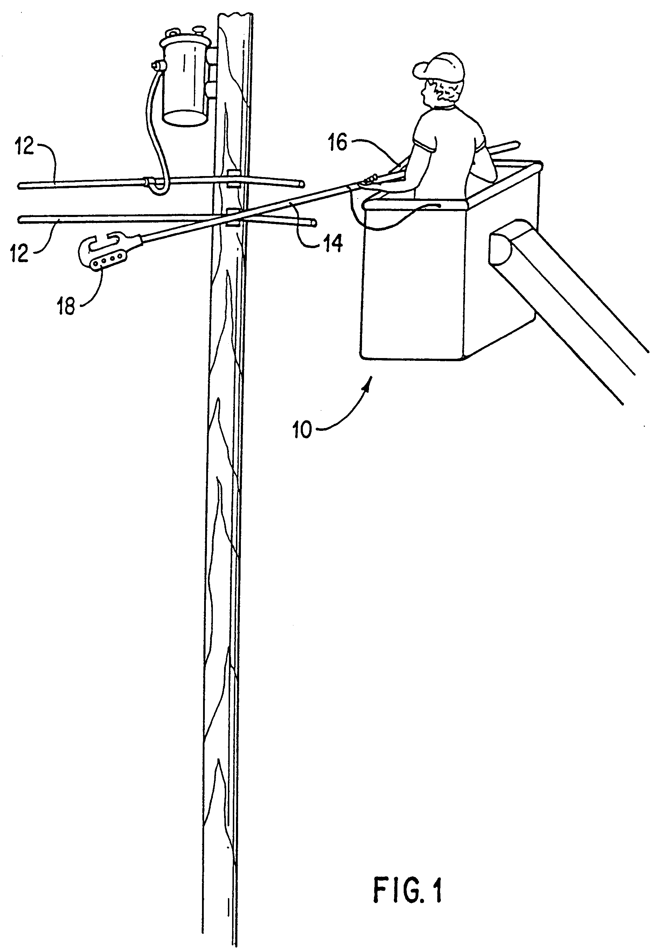

To illustrate, U.S. Patent 3,969,818, granted July 20, 1976 to Walter J. Maytham, and assigned to Speed Systems, Inc., discloses a tool (10) for removing insulation (12) from a cable (14), such as an electrical conductor. The tool includes a plurality of rollers (66, 76; 78, 80; 82, 84; and 86, 88) for supporting cables of different diameters, while permitting rotation of the tool relative to the cable. The tool includes a blade (92) which is positioned to cut into the insulation of the cable upon relative rotation thereto. The axis of rotation of each supporting roller is angled relative to the longitudinal axis (101) of the supported cable so that the cable and tool move relatively axially during such relative rotation thereof. Handles (112, 114) are used to rotate the tool, and the spirals of cut insulation are shown in dotted outline in FIG. 1 of Maytham '818.

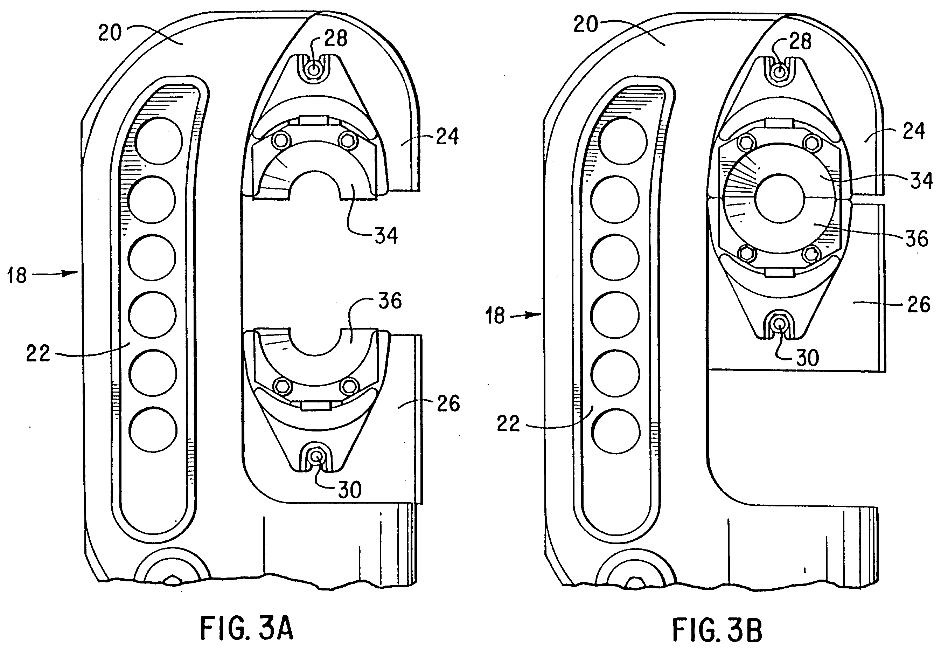

U.S. Patent 4,179,804, granted December 25, 1979 to Walter J. Maythem, and assigned to Speed Systems, Inc., also discloses a tool (10) for removing insulation (12) from the core, or conductor (16), of an electrical cable. A plurality of rollers (32) are provided, with the axis of rotation for each roller being adjusted relative to the longitudinal axis of the cable, at a selected angle (as shown in FIG. 3). A cutting blade (68) is adjustably mounted relative to the conductor. The tool is characterized further by a plurality of rollers (44, 46) which are adjustable together, so that the angle between the rotation of each such roller is varied relative to the longitudinal axis of the cable. Such tool is capable of determining, and varying, the axial thickness of cable insulation to be cut for each turn of the tool relative to the cable, as noted in column 1, lines 34-38 of Maytham '804. Also, the rate of feed can be chosen to be zero to allow a flat face of insulation to be cut on an end thereof, as noted in column 1, lines 29-31.

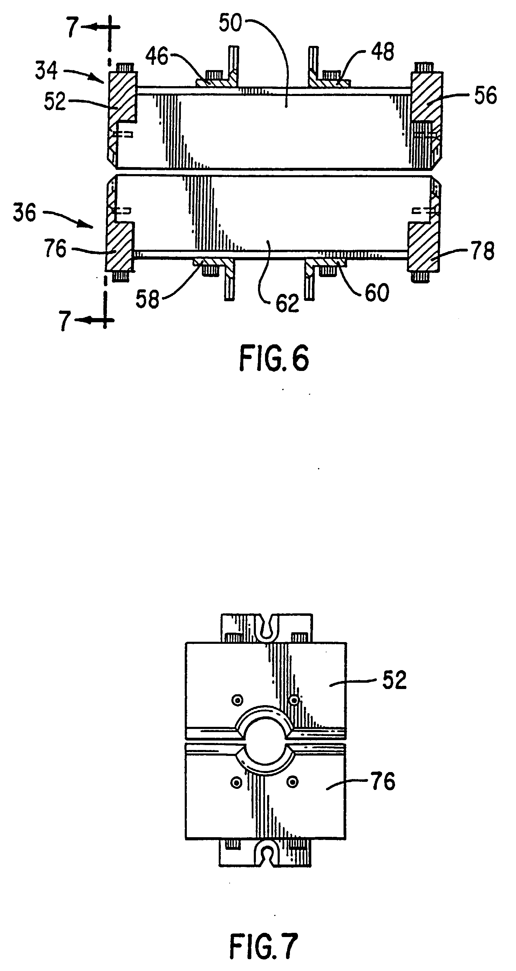

Refinements of the insulation stripping tool disclosed in U.S. Patent 3,969,818, are found in U.S. 4,370,808, also granted to Walter J. Maytham, and assigned to Speed Systems, Inc. To illustrate, the Maytham '808 patent discloses a single edged cutting tool utilizing one cutting edge on a blade (62; see FIGS. 6a, 6b) appropriately shaped so as to wedge the insulation (71, such as semiconducting conductor shield) out of, and away from, the strands of cable, without nicking, or cutting, the underlying cable.

Another hand tool for stripping insulation from electrical conductors is disclosed in U.S. Patent 4,945,788, granted August 7, 1990 to James J. Matthews and assigned to the Ripley Company, Inc. of Cromwell, Connecticut. Matthews discloses a tool incorporating a circular ringing knife blade (52 - see FIGS. 7-8), and a separate stripping, or shaving, blade (100 - see FIGS. 11a-11b) to remove insulation in the mid-portion of a span of wire, or cable (40), of various diameters. The blades are retained in a cast alloy frame, or body (30), and the cable to be stripped is held in position by cooperating jaws (36, 38; see FIG. 10). The tool is grasped, and rotated, by opposed handles (22, 24) so that the tool is advanced longitudinally relative to the cable, and a smooth, helical cutting operation is achieved.

Other tools for stripping insulation from electrical conductors are shown in U.S. Patent 4,955,137, granted September 11, 1990, to James J. Matthews, and assigned to Ripley Company; U.S. Patent 4,028,800, granted June 14, 1977, to James J. Matthews; and U.S. Patent 3,990,331, granted November 9, 1976, to James J. Matthews, and U.S. Patent 3,978,582, granted September 7, 1976 to Walter J. Maytham, and assigned to Speed Systems, Inc.

### SUMMARY OF THE INVENTION

While the known insulation stripping tools noted above function with varying degrees of success, on de-energized cables, such tools are dangerous to use on energized cables, for the insulation scoring and/or cutting blades may contact the conductive core of the cable. Furthermore, such known tools require a large clearance area around the individual cables for the tools must be rotated along the longitudinal axis of the cables in order to perform the insulation stripping operation, which usually calls for the insulation to be scored, lifted, and unwrapped with a helically oriented, peeling action. Consequently, such known tools are ill-suited for use with cables comprising metal strands, such as aluminum, that are easily scored or nicked. Also, known insulation stripping tools have proven to be inadequate when semi-conductive insulating layers (semi-con) have been compressed snugly about the metal conductors or strands.

Thus, with the shortcomings of known insulation stripping tools clearly in mind, the instant invention sets forth a unique set of cable stripping dies that function admirably in removing insulation from insulated electrical cables, including the tenacious semi-conductive layer. The unique dies cleanly remove the insulation by shearing same at the desired location, thereby exposing the conductive core of the cable. The insulation remaining on the cable is an arcuate "slug," that can be removed manually so that a tap, splice, or other electrical connection, can readily be established with the exposed conductive core of the cable.

The unique die set consists of two identical dies that are oppositely disposed in the jaws of the working head of a hydraulic tool. Cutting blades are secured to the opposite sides of each die body to pierce the insulation while centering the dies on the insulated electrical cable. The cutting blades engage, in an abutting manner, as the blades are drawn toward their closed position. Longitudinal knife edges on each die shear the insulation, and separate same from the metallic core of the electrical cable. The cutting blades and knife edges work in concert with each other. An arcuate "slug" of insulation remains loosely engaged with, or resting upon, the metallic core, and such slug is easily removed by hand, or with a manual tool.

The instant stripping die set is admirably suited for use in known hydraulically operated crimping tools, such as the Burndy Y46 series of tools, available from the Burndy Corporation of Manchester, New Hampshire. These crimping tools may be utilized in conjunction with insulated "hot sticks", so that mid-span connections may be effectuated while overhead power lines are energized. The ability to work on power lines, while energized, without compromising worker safety, is highly desirable.

Additionally, crimping tools employing the instant dies are well suited for working in close quarters, since the tool need not be advanced, or rotated, relative to the longitudinal axis of the electrical cable to be stripped. Such capability makes the tool employing such dies well-suited for mid-span operations, and further adapts the crimping tool for use with cables having multiple layers of insulation, including a semi-conductive layer that is bonded to, or adhered to, the metallic core of the insulated cable.

The objectives of the present invention are realized by the straight-line movement of the instant dies when installed in the jaws of a hydraulically operated crimping tool. A cutting blade with a semi-circular cut-out and tapered edges is situated at each side of the die, and a pair of longitudinally extending knife edges are located therebetween. The cutting blades abut, in the radial and circumferential directions, when the dies are forced together to pierce the outer layer of insulation. Simultaneously, the knife edges shear segments of the insulation from opposite faces of the conductive core of the cable in a parallel fashion. Angled surfaces on the dies free the insulation from the metallic core of the cable, after such insulation has been cut by the knife edges.

Furthermore, the method of stripping insulation from an electrical cable, when utilizing the unique dies, is simplified considerably. The method entails the steps of (1) introducing the insulated cable between the opposing dies when mounted in a crimping head of a tool, (2) advancing the dies into engagement with the insulation on the cable so that the cutting blades center the dies on the cable, (3) continuing the straight-line advancement of the dies toward one another so that the longitudinally extending knife edges on each die shear the insulation on the cable and sever arcuate segments therefrom, to expose opposite faces of the core of the cable, and (4) removing the remaining "slugs" of insulation to completely expose the core of the cable. The method of operation functions optimally when the segments of insulation sheared by the cutting dies are parallel to each other. The remaining slugs of insulation may be removed manually, as with a gloved hand, or by a simple manual tool.

The incorporation of the instant cable stripping dies into the jaws of a hydraulically operated crimping head, operatively associated with a "hot stick", allows one to realize the inherent advantages of hydraulic tools. Such advantages, when contrasted with known mechanical tools, may be summarized as speed, size, and force. A hydraulically operated crimping head, with the unique dies installed therein, can remove the insulation from an insulated cable in fifteen seconds. Also, the hydraulically operated crimping head generates a far larger force than its mechanical counterpart, and the increased force contributes to satisfactory operation in "hot stick" applications.

Furthermore, the unique die set may be included as an integral part of new crimping tools, or existing crimping tools may be retrofitted with such die set. The die set may be fabricated in a variety of sizes, so that insulated cables, of different diameters, may be stripped efficiently, while the cables are energized. While the instant dies were developed for use on overhead power cables, the dies may be used with other power cables, with equal facility. Also, the instant dies do not nick the metallic core of insulated cables, and thus may be used whether the power lines are energized, or not, without endangering the linesperson utilizing the hydraulic tool.

Yet additional advantages of the instant cable stripping dies, which function satisfactorily whether the power cables are energized, or not, will become readily apparent to the artisan, when the appended drawings are construed in harmony with the ensuing description of a preferred embodiment of the cable stripping dies.

### BRIEF DESCRIPTION OF THE DRAWINGS

**FIG. 1** shows the instant cable stripping dies employed within a crimping head located at the end of a "hot stick" to remove insulation from aerial power transmission cables;
**FIG. 2** is a side elevational view, on an enlarged scale, of the crimping head located at the upper end of the "hot stick" of FIG. 1, such view being taken prior to insertion of the cable stripper dies;
**FIG. 3A** is a fragmentary view, on a further enlarged scale, of the crimping head of FIGS. 1 and 2, such view showing the cable stripping dies installed in the jaws, with the jaws in the "open" position;
**FIG. 3B** is a view similar to FIG. 3A, but showing the jaws of the crimping head in the "closed" position;
**FIG. 4** is an exploded perspective view of a length of insulated cable, with segments of insulation sheared therefrom, by the cable stripping dies constructed in accordance with the principles of the instant invention;
**FIG. 5** is an exploded perspective view of the lower of the pair of identical dies shown in FIG. 4;
**FIG. 6** is a vertical cross-sectional view taken through the instant cable stripper dies;
**FIG. 7** is an end elevational view of the semi-circular blades on one end of the pair of cable stripper dies shown in FIG. 6, such view being taken along line 7-7 in FIG. 6 and in the direction indicated;
**FIG. 8** is a plan view of a length of insulated cable, with a segment of insulation removed, at mid-span; and
**FIG. 9** is a perspective view of an end of an insulated cable, the insulation having been removed so that a terminal may be joined to the core of the cable.

### DESCRIPTION OF THE PREFERRED EMBODIMENT

FIG. 1 depicts, in a schematic fashion, the environment in which the unique cable stripper dies function. A linesperson operates out of a bucket so that he/she can service the overhead, or aerial, power transmission cables 12. The linesperson is equipped with an insulated "hot stick" 14. A manual control 16 is located on one end of the "hot stick," so that the linesperson can operate working head 18 situated at the remote end of the "hot stick." The working head is C-shaped, in side elevation, to fit over an individual cable 12 and prepare same for taps, splices, terminations, and the like.

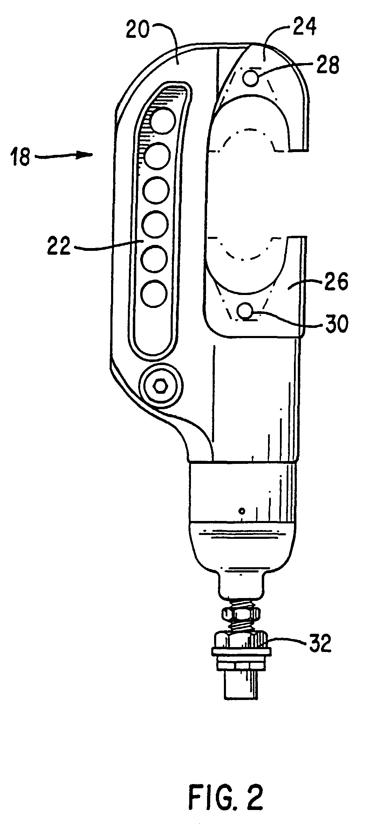

FIG. 2 shows working head 18 in greater detail. The head is formed of a forged steel body 20, with a reinforced back 22. A fixed jaw 24 is located at the upper end of body 20, and a cooperating, movable jaw 26 is situated therebelow. A die lock 28 is located on jaw 24, and an identical die lock 30 is located on jaw 26. The dies retained in place by locks 28 and 30 are shown in phantom outline in FIG. 2.

Hydraulic fitting 32 is located at the lower end of working head 18, and fitting 32 allows hydraulic pressure, which may reach 10,000 psi, to be introduced into the crimping head, from a remote source (not shown), to drive movable jaw 26 toward fixed jaw 24. Crimping head 18 and the hydraulic power source therefor are known, commercially available components, sold under the trademark "Y46 Series" by Burndy Corporation of Manchester, New Hampshire, the assignee of the instant application.

FIGS. 3A and 3B show an upper die indicated generally by reference numeral 34, engaged with die lock 28 in jaw 24, while a lower die, indicated generally by reference numeral 36, is engaged with die lock 30 in jaw 26. The dies are identical in size and shape, but are mounted facing in opposite directions for cooperative interaction. FIG. 3A shows movable jaw 26 in its lowermost position, while FIG. 3B shows the same jaw at its uppermost, or closed position.

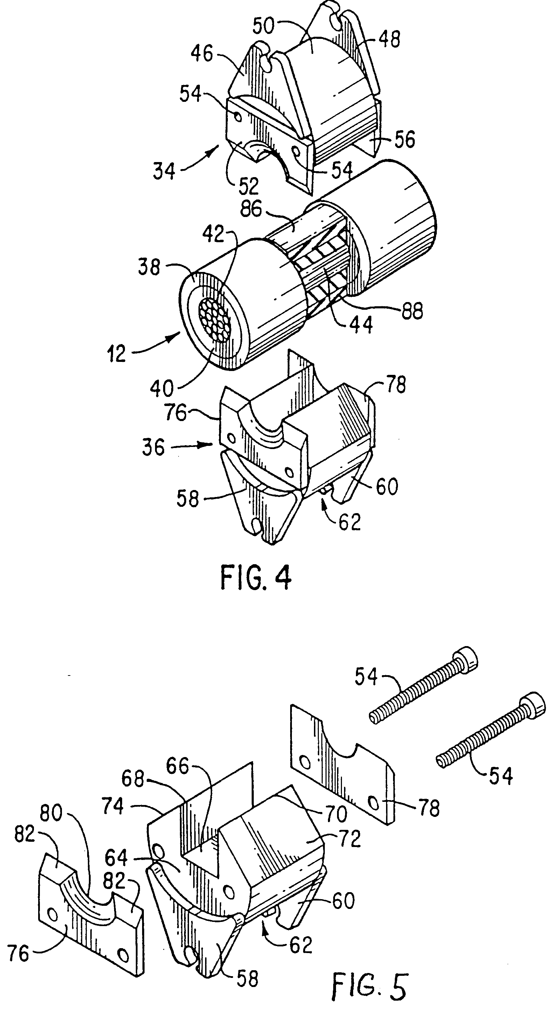

FIG. 4 shows a fragment of insulated cable 12. Cable 12 includes an outer layer 38 of high density polyethylene, a central layer 40 of high molecular weight polyethylene, a smaller inner layer 42 of semi-conducting polyethylene, and a core 44 formed of wires made from a conductive metal, such as aluminum. One representative cable of such configuration is manufactured and distributed by the Hendrix Wire and Cable Co. of Milford, New Hampshire.

Upper die 34 comprises a first mounting plate 46 and a second mounting plate 48 secured to opposite lateral sides of die body 50. The mounting plates cooperate with die lock 28 to secure die 34 to fixed jaw 24. Mounting plate 46 is secured to the front face of the jaw, while mounting plate 48 is secured to the rear face (not shown) of the jaw. Die body 50 fits snugly within jaw 24. A first cutting blade 52 is secured to body 50 of upper die 34 below first mounting plate 46 by fasteners 54, and a second cutting blade 56 is secured to body 50 below second mounting plate 48 in a similar manner.

Lower die 36, as shown in FIGS. 4 and 5, has a first mounting plate 58 and a second mounting plate 60 secured to opposite lateral sides of die body 62. The mounting plates cooperate with die lock 30 to secure die 36 to movable jaw 26. Mounting plates 58, 60 are secured to the opposite faces of jaw 26,and die body 62 fits snugly within the jaw.

Die body 62 includes a base 64 that is arcuate in end-elevation, and an upwardly opening, U-shaped channel 66 that extends longitudinally through base 64. The upper edges of channel 66 are sharpened to form spaced knife edges 68, 70. The knife edges are parallel to one another. A first outwardly tapering surface 72 is formed outboard of knife edge 70, while a second outwardly tapering surface 74 is formed outboard of knife edge 68.

A first cutting blade 76 is secured to one face of die body 62 adjacent to mounting plate 58, while a second cutting blade 78 is secured to the opposite face of the die body. Fasteners 54, assume the form of threaded bolts that pass through passages drilled longitudinally through the die body and apertures in the cutting blades, and secure the cutting blades 76, 78 to the die body, at opposite lateral sides thereof.

Cutting blade 76 includes a rigid body of high-strength steel, with a centrally located semi-circular cut-out 80 and tapered surface 82 located on opposite sides thereof. Cutting blades 52, 56, 76 and 78 are identical in shape. Dies 34 and 36 are identical in shape, but are rotated 180° from one another, so that the channel, cutting edges, etc. in die 34 are not visible in FIG. 4.

FIGS. 6 and 7 show the manner in which cutting blades 52, 76; 56, 78 abut, when movable jaw 26 is driven through the insulated cable to contact fixed jaw 24 of working head 18. The cutting blades, including the tapered surfaces 80, 82, etc., cause the dies 34, 36, to penetrate the insulating layers on cable 12 and center the dies thereupon, during the initial phase of an insulation stripping operation. The penetration of the cutting blades continues until the segment of insulation between the blades is cut free from the metallic core 44 of the cable 12, but without scoring or nicking same.

After the dies have been centered on the insulated cable, the hydraulic forces transmitted to crimping head 18 cause the relative movement of jaw 26 toward jaw 24 to continue, and knife edges, such as 68, 70, etc. on the cooperating dies shear the insulating layers away from core 44 of cable 12. Channels 66 in dies 36, 34 receive, and seat, the upper and lower surfaces of cable 12. The angled segments of each die, such as 72, 74 of die 36, force the sheared segments of insulation away from the metallic core of cable 12, resulting in the removal of opposite, crescent shaped segments. Arcuately shaped slugs 86, 88, which rest upon metallic core 44, may then be removed with a gloved hand, or with a simple manual tool, so that one metallic core 44 of the insulated cable is fully exposed.

FIG. 7 shows that cutting blade 52 in upper die 34 contacts cutting blade 76 in lower die 36 at the completion of the power stroke forcing the dies together. The same relationship holds true for cutting blades 56 and 78. When the cutting blades engage one another, abutting contact is established on both the longitudinal and radial surfaces of the cutting blades.

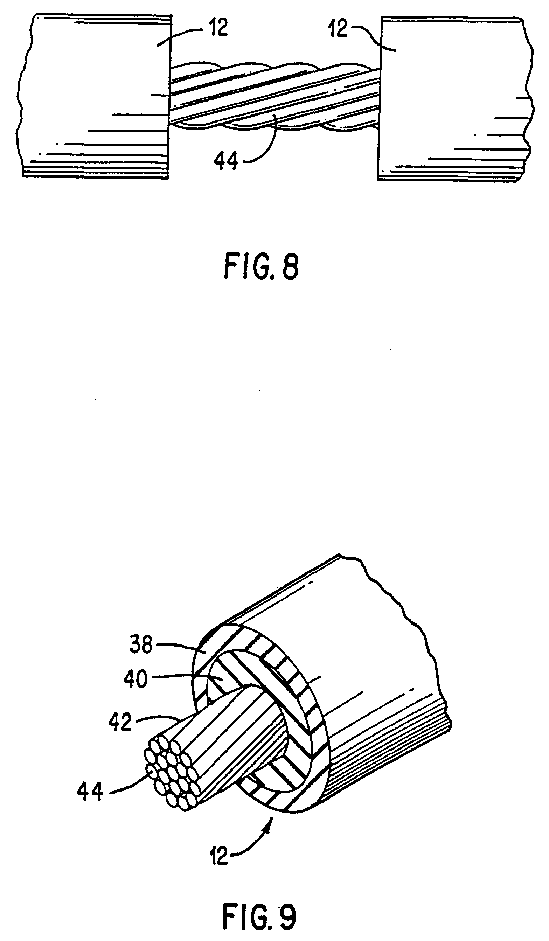

As shown in FIG. 8, the removal of the slugs of insulation in an expeditious fashion, reveals 2-5 inches of core 44; a mid-span tap may then be completed in the usual manner. However, the insulation is removed cleanly and neatly, whether the cable is energized or not, and the minimum possible amount of insulation is removed, because of the straight-line operation of the hydraulic crimping tool and the configuration of the unique die set.

As suggested in FIG. 9, dies 34, 36 can be employed within working head 18 to prepare cable 12 to receive a connector, a splice, an end termination, or the like. The stripper dies thus are capable of diverse functions, carried forth in a speedy and efficient manner, and without damaging power transmission cable 12 by nicking, or scoring, its metallic core.

Although the cable stripping dies 34, 36 were developed to remove insulation, including the tenacious semi-conductive (semi-con) layer from power transmission cable, such as cable 12, the stripping dies function satisfactorily with other types of power cables, such as copper, ACSR, AWAC, NAVY, etc. Consequently, the cable stripping dies 34, 36 can be used with any cable that has at least one layer of insulation, or a jacket, that must be removed prior to making terminations, or mid-span taps, splices, or applying terminals, even while the cable is energized.

Various modifications, revisions, and refinements to cable stripping dies 34, 36 will undoubtedly occur to the skilled artisan from a review of the foregoing description of a preferred embodiment of the present invention. Consequently, the appended claims should be construed in a liberal fashion commensurate with the spirit and scope of this invention, and should not be construed narrowly in accordance with a literal reading of the claims.

## Claims

1. A die set for stripping insulation from an electrical power cable (12) including at least one layer (38, 40) of insulation surrounding a conductive metallic core (44), said die set comprising:
a) a first die (34) adapted to be mounted in a first jaw (24) of the working head (18) of a cable stripping tool,
b) a second die (36) adapted to be mounted in a second jaw (26) of the working head (18) of a cable stripping tool,
c) said dies (34, 36) being identical in configuration and mounted in opposing relationship for cooperative interaction,
d) each of said dies (34, 36) comprising a longitudinally extending body (50, 62) terminating, at opposite ends, in laterally extending sides,
e) said body (50, 62) having a channel (66) formed therein, said channel (66) extending clear through said body,
f) knife edges (68, 70) formed on opposite sides of said channel (66),
g) a first cutting blade (52, 76) secured to one side of said body (50, 62) and a second cutting blade (56, 78) secured to the other side of said body,
h) each of said cutting blades (52, 56, 76, 78) including a semi-circular central cut-out section (80) whereby
i) said cutting blades (52, 56, 76, 78) are adapted to center the die set on a longitudinally extending cable (12) as the dies (34, 36) are moved relative to one another, so that said knife edges (68, 70) shear insulation from said cable as said cable is forced into said channels (66) in said cooperating dies (34, 36).

2. The die set as defined in claim 1 wherein said knife edges (68, 70) are located at opposite sides of the entrance to said channel (66) in said die body (50, 62).

3. The die set as defined in claim 1 wherein each die body (50, 62) is arcuate when viewed in end elevation and angled segments (72, 74) are defined between said knife edges and said arcuate body, said angled segments (72, 74) being adapted to free sheared segments of insulation (38, 40) from the core (44) of the cable (12).

4. The die set as defined in claim 1 wherein said cutting blades (52, 56, 76, 78) are tapered to readily penetrate the insulation (38, 40) on the electrical power cable (12).

5. The die set as defined in claim 4 wherein said cutting blades (52, 56, 76, 78) are thinnest at the area that contacts the insulation (38) on the cable (12).

6. The die set as defined in claim 1 wherein said first and second cutting blades (52, 56) on said first die (34) abut against said first and second cutting blades (76, 78) on said second die (36) when said dies (34, 36) have been moved to closed position.

7. The die set as defined in claim 1 wherein said channel (66) is U-shaped when viewed in end elevation.

8. A power tool (14) including a working head (18) with a pair of jaws (24, 26), and a die set according to one of claims 1 to 7 mounted in said jaws (24, 26) for stripping insulation from an electrical power cable (12),
a) said head including a fixed jaw (24) and a jaw (26) movable relative thereto,
b) said jaws (24, 26), when opened, being spaced sufficiently to receive an insulated electrical cable (12) therebetween,
c) the first die (34) of said die set being secured to said fixed jaw (24) and the second die (36) being secured to said movable jaw (26).

9. The tool as defined in claim 8 wherein a source of hydraulic power is connected to said tool (14) to drive said movable jaw (26) toward said fixed jaw (24) with sufficient force to cleanly remove slugs of insulation (38, 40, 42) from the metallic core (44) of the insulated cable (12).

10. The tool as defined in claim 8 wherein said first and second cutting blades (52, 56) on said first die (34) overlap slightly relative to the first and second cutting blades (76, 78) on said second die (36) when said jaws (24, 26) are moved into a closed position encircling the core (44) of the insulated cable (12).

11. A method of using a tool (14) with a die set mounted in its working head (18) for stripping insulation (38, 40) from an electrical power cable (12) comprising at least one layer of insulation (38, 40) surrounding a conductive metallic core (44),
a) said die set comprising a first die (34) mounted in a fixed position within said working head (18) and a second die (36) mounted within said working head (18) for movement relative to said first die (34),
b) said dies (34, 36) being identical in configuration and mounted in opposing relationship for cooperative interaction,
c) each of said dies (34, 36) comprising a longitudinally extending body (50, 62) terminating, at opposite ends, in laterally extending sides,
d) said body (50, 62) having a U-shaped channel (66) formed therein, said channel (66) extending clear-through said body,
e) knife edges (68, 70) formed on opposite sides of said channel (66),
f) a first cutting blade (52, 76) secured to one side of said body (50, 62) and a second cutting blade (56, 78) secured to the other side of said body (50, 62),
g) each of said cutting blades (52, 56, 76, 78) including an arcuate central cut-out section (80),
h) said method of stripping insulation from the insulated electrical power cable (12) comprising the steps of:
1) positioning a cable (12) in the central sections (80) of said cutting blades (52, 56; 76, 78) of at least one of said dies (34; 36),
2) advancing said second die (36) relative to said first die (34) with sufficient force that said cutting blades (52, 56, 76, 78) penetrate said insulation (38, 40) and center said dies (34, 36) on said cable 12,
3) continuing to advance said second die (36) relative to said first die (34) so that said cable (12) is forced into said channels (66) as said knife edges (68, 70) sever slugs of insulation from opposite faces of said cable (12) to reveal the metallic core (44).

12. The method of claim 11 wherein each die body (50, 62) is arcuate when viewed in side elevation, and angled segments (72, 74) are defined between said knife edges (68, 70) and said arcuate body, said method further including the step of:
4) directing the insulation severed by said knife edges (68, 70) away from the metallic core (44) by passing the insulation over said angled segments (72, 74).

13. The method of claim 14 further comprising the step of:
5) manually removing slugs of the insulation resting atop the metallic core (44).

14. The method of one of claims 11 to 13 wherein said dies (34, 36) are moved relative to one another in a smooth, continuous manner.

15. The method of one of claims 11 to 14 wherein said dies (34, 36) are moved relative to one another in a straight-line fashion.

16. The method of one of claims 11 to 15 wherein said dies (34, 36) are moved relative to one another until said cutting blades (52, 56) on said first die (34) and said cutting blades (76, 78) on said second die (36) overlap to a small degree and encircle the metallic core (44) of the cable without physically contacting same.
